(19) **Europäisches Patentamt / European Patent Office / Office européen des brevets**

(11) **EP 2 233 990 A1**

(12) **EUROPEAN PATENT APPLICATION**
published in accordance with Art. 153(4) EPC

(43) Date of publication:
**29.09.2010 Bulletin 2010/39**

(21) Application number: **08854527.2**

(22) Date of filing: **17.11.2008**

(51) Int Cl.:
*G05B 6/02* (2006.01)       *G05B 11/28* (2006.01)
*F15B 13/044* (2006.01)    *F15B 13/16* (2006.01)
*F15B 11/04* (2006.01)

(86) International application number:
**PCT/CN2008/073091**

(87) International publication number:
**WO 2009/067938 (04.06.2009 Gazette 2009/23)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **28.11.2007 CN 200710168189**

(71) Applicant: **Sany Heavy Industry Co., Ltd.**
**Changsha**
**Hunan 410100 (CN)**

(72) Inventor: **SHI, Peike**
**Hunan 410100 (CN)**

(74) Representative: **Epping - Hermann - Fischer**
**Patentanwaltsgesellschaft mbH**
**Ridlerstrasse 55**
**80339 München (DE)**

(54) **AN ELECTRO-HYDRAULIC PROPORTIONAL FLOW VALVE SPEED REGULATING CONTROL SYSTEM AND ITS METHOD**

(57)    An electro-hydraulic proportional flow valve speed regulating control system includes a PWM regulating device, an electro-hydraulic proportional flow valve, a hydraulic executing element, a speed measuring module, an electro-hydraulic proportional flow valve characteristic measuring module, and a feedforward control module. The speed measuring module measures a speed of the hydraulic executing element and sends the measured result to the electro-hydraulic proportional flow valve characteristic measuring module which measures a minimum actuating current and a maximum actuating current of the electro-hydraulic proportional flow valve and a maximum speed of the hydraulic executing element and inputs these measured results to the feedforward control module. With these measured results, the feedforward control module establishes a corresponding relationship between the speed of the hydraulic executing element and the valve core current and inputs the valve core current in correspondence with the setting speed value to the PWM regulating device, thereby driving the electro-hydraulic proportional flow valve.

Fig. 3

**Description**

The present application claims the benefit of priority to Chinese patent application No.200710168189.5 titled "AN ELECTRO-HYDRAULIC PROPORTIONAL FLOW VALVE SPEED REGULATING CONTROL SYSTEM AND ITS METHOD", filed with the Chinese State Intellectual Property Office on November 28, 2007. The entire disclosure thereof is incorporated herein by reference.

FIELD OF THE INVENTION

The present invention relates to a flow control of a hydraulic system, in particular to a speed regulating control system and its method for an electro-hydraulic proportional flow valve.

BACKGROUND OF THE INVENTION

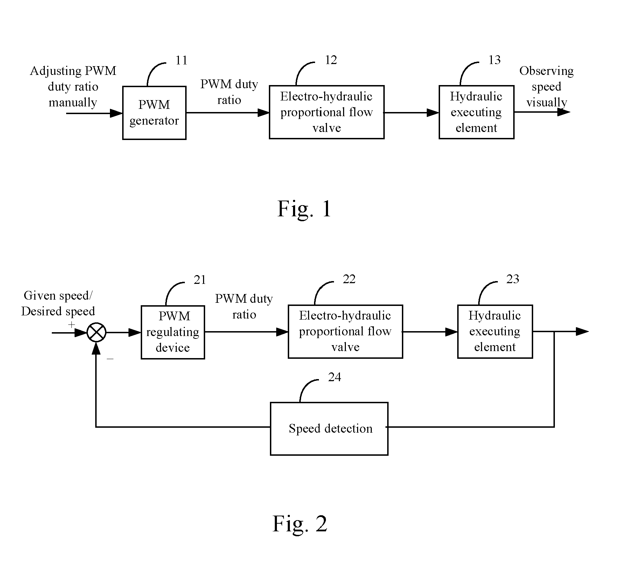

The electro-hydraulic proportional flow valve is a hydraulic valve in which the output flow is proportional to the input signal. The electro-hydraulic proportional flow valve can control the pressure, flow and direction of the hydraulic fluid continuously and proportionally in accordance with the given input electrical signal. At present, two kinds of control systems are mostly used to control the actuating, especially the speed, of the hydraulic executing element (including a hydraulic cylinder and a hydraulic motor) by the use of the output flow of the electro-hydraulic proportional flow valve. One control system is adapted to the situation where the requirement on the speed accuracy is low, and is an open-loop speed regulating control system combining PWM regulating technology with man-made rough observation and so on. Fig. 1 is a schematic diagram of the above open-loop control system. As shown in Fig. 1, the open-loop control system includes a PWM generator 11, an electro-hydraulic proportional flow valve 12 and a hydraulic executing element 13. In such system, the speed of the hydraulic executing element is observed visually. In the process for controlling the speed, due to a low requirement on control quality, the speed of the hydraulic executing element is observed visually, and the speed of the executing mechanism is then roughly regulated through adjusting the PWM duty ratio manually by the operator so as to meet the requirements. In the above open-loop speed regulating control system, the control channel quality of the system is low, and the speed of the hydraulic executing element is regulated depending on the judgments of a person, thereby the error being large.

The other control system is adapted to the situation where the requirement on the speed accuracy is high, and is a closed-loop speed regulating control system combining the pulse width modulation (PWM) regulating technology with sensor measuring technology and so on. Fig. 2 is a schematic diagram of the above closed-loop control system. As shown in Fig. 2, the closed-loop control system includes a PWM regulating device 21, an electro-hydraulic proportional flow valve 22, a hydraulic executing element 23 and a speed detecting device 24. Based on the operating principle of the electro-hydraulic proportional flow valve, there is a specific relationship between the flowrate and the valve core opening degree. And there is also a specific relationship between the current of the valve core coil of the electro-hydraulic proportional flow valve (hereinafter referred to as valve core current) and the valve core opening degree. The relationship between the flowrate and the current may be deduced by the relationship between the current and the valve core opening degree. Further, there is a specific relationship between the current and the PWM duty ratio. Thus, the relationship between the PWM duty ratio and the flowrate may be determined. Therefore, in the process for controlling the speed of the hydraulic executing element, the desired flowrate may be achieved simply through regulating the PWM duty ratio by the PWM regulating device 21, so as to allow the hydraulic executing element 23 to generate a corresponding speed and a corresponding displacement, and then, the speed detecting device 24 compares the detected speed with the given speed, thereby forming a speed regulating closed-loop control system.

Due to the effect of factors such as the voltage fluctuations of power supply and the resistance distribution of the valve core coil (although the resistance of an individual valve core coil will change with temperature change, different valve core coils have different resistances even at the same temperature), when the PWM duty ratio is constant, the consistency of the valve core current of the electro-hydraulic proportional flow valve is poor. As a result, the flowrate control of the electro-hydraulic proportional flow valve and the speed control of the hydraulic executing element are disturbed. Because of the above factors, the control quality of the forward channel of the closed-loop speed regulating control system is poor. Accordingly, the closed-loop speed regulating control system has to carry out a lot of regulations based on the signals from the speed feedback channel so as to ensure that the actual speed follows the given speed. It can be known from the basic theory of the automatic control, if the feedback channel is highly depended on and other types of compensation control are not adopted, the dynamic response quality and static control accuracy of the control system would be necessarily affected.

SUMMARY OF THE INVENTION

The technical problem to be solved by the present invention is to provide a speed regulating control system and its method for an electro-hydraulic proportional flow valve, which can increase the quality of the forward control channel of the speed regulating control system.

To solve the above-described technical problem, the present invention provides a speed regulating control system for an electro-hydraulic proportional flow valve, including: a PWM regulating device; an electro-hydraulic proportional flow valve; and a hydraulic executing element, wherein the electro-hydraulic proportional flow valve and the hydraulic executing element are driven by a PWM signal from the PWM regulating device. The control system further includes a displacement/speed measuring module; an electro-hydraulic proportional flow valve characteristic measuring module; and a feedforward control module, wherein the displacement/speed measuring module measures a displacement or speed of the hydraulic executing element and sends the measured result to the electro-hydraulic proportional flow valve characteristic measuring module; the electro-hydraulic proportional flow valve characteristic measuring module measures a minimum actuating current and a maximum actuating current of the electro-hydraulic proportional flow valve and a maximum speed of the hydraulic executing element and sends these measured results to the feedforward control module; and the feedforward control module establishes a corresponding relationship between a movement speed of the hydraulic executing element and a valve core current by use of these measured results, and inputs a valve core current value in correspondence with a given speed value based on the corresponding relationship to the PWM regulating device so as to drive the electro-hydraulic proportional flow valve.

The speed measuring module compares the measured movement speed of the hydraulic executing element with a given speed of the system to obtain a speed error signal.

The control system further includes a current regulating module to regulate the speed error signal and input the regulated result to the PWM regulating device.

The control system further includes a valve core current detecting module connected with a valve core coil of the electro-hydraulic proportional flow valve and forming a valve core current feedback control circuit along with the PWM regulating device.

Accordingly, the present invention further provides a speed regulating method for an electro-hydraulic proportional flow valve, including: measuring a maximum actuating speed of a hydraulic executing element and a maximum actuating current and a minimum actuating current of a valve core of the electro-hydraulic proportional flow valve; establishing a corresponding relationship between a movement speed of the hydraulic executing element and a valve core current by use of the maximum actuating speed, the maximum actuating current and the minimum actuating current of the electro-hydraulic proportional flow valve; obtaining a valve core current in correspondence with a given speed of the system according to the corresponding relationship; and driving the valve core current control circuit with the valve core current in correspondence with the given speed of the system.

The measuring is an online measuring or an offline measuring.

Compared with the prior art, the present invention has the following advantages.

On the one hand, the speed regulating control system for the electro-hydraulic proportional flow valve according to the present invention makes an inner loop current compensation and a speed feedforward control to the speed regulating control system by the use of the valve core current feedback and the feedforward control method based on the offline measurement of the electro-hydraulic proportional flow valve characteristic, so as to substantially increase the response quality and control accuracy of the forward channel of the speed regulating control system and reduce the regulation amount of the speed feedback channel, thereby improving the quality of the closed-loop control.

On the other hand, since the feedforward control module for offline measurement is introduced in the open-loop control system, the corresponding relationship between the movement speed of the hydraulic executing element and the valve core current may be determined. Thus, when controlling the speed of the executing mechanism, the given speed of the system as the feedforward control signal is directly converted to the given valve core current value which is sent to the valve core current feedback control circuit to drive the electro-hydraulic proportional flow valve. Therefore, in the situation where the requirement on the speed accuracy is low, the control quality of the open-loop speed regulating control system is improved.

BRIEF DESCRIPTION OF THE DRAWINGS

The above and other objects, features and advantages of the present invention will be more apparent from the detailed description for the preferred embodiments of the invention shown in the drawings, in which the same reference numeral denotes the same part.

Fig.1 is a schematic diagram of a open-loop control system in the prior art;

Fig.2 is a schematic diagram of a closed-loop control system in the prior art;

Fig.3 is a schematic diagram of a speed regulating control system for an electro-hydraulic proportional flow valve according to a first embodiment of the present invention;

Fig.4 is a graph of a relationship between a valve core current and a flowrate of an electro-hydraulic proportional flow valve;

Fig.5 is a graph of a relationship between a speed of a hydraulic executing element and a valve core current of the electro-hydraulic proportional flow valve;

Fig.6 is a schematic diagram of a measuring process for the minimum actuating current of the hydraulic executing element;

Fig.7 is a schematic diagram of a measuring process for the maximum actuating current of the hydraulic executing element;

Fig.8 is a schematic diagram of a speed regulating control system for an electro-hydraulic proportional flow valve according to a second embodiment of the present invention; and

Fig.9 is a schematic diagram of a speed regulating control system for an electro-hydraulic proportional flow valve according to a third embodiment of the present invention.

## DETAILED DESCRIPTION OF THE INVENTION

Hereinafter, for more readily understanding the above objects, features and advantages of the present invention, the specific embodiments of the present invention will be described in detail by referring to the drawings.

In the following description, many specific details are explained for fully understanding the present invention. However, the present invention may be carried out by other embodiments which differ from those described herein. Those skilled in the art may carry out the present invention with the embodiments without departing from the spirit thereof. Therefore, the present invention is not limited to the following disclosed specific embodiments.

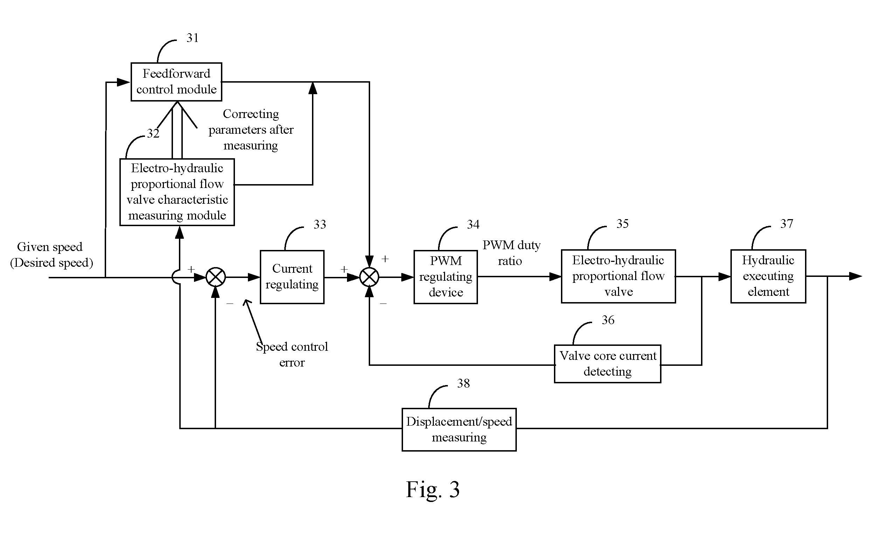

Fig.3 is a schematic diagram of a speed regulating control system for an electro-hydraulic proportional flow valve according to a first embodiment of the present invention. As shown in Fig.3, the speed regulating control system for the electro-hydraulic proportional flow valve according to the embodiment of the present invention includes a PWM regulating device 34, an electro-hydraulic proportional flow valve 35 and a valve core current detecting device 36. The valve core coil of the electro-hydraulic proportional flow valve 35 is connected to a valve core current detecting device 36, and forms a valve core current feedback control circuit along with the PWM regulating device 34. The basic form of the PWM regulating device 34 is that, the equivalent inductance and the equivalent resistance of the electro-hydraulic proportional flow valve are connected with freewheeling diode in parallel, and then connected to the power supply via a high power triode or a FET (Field-effect transistor). The PWM signal controls the triode or FET to turn on or turn off, so that the voltage waveform of the coil of the electro-hydraulic proportional flow valve is a rectangular wave having a constant period and an adjustable pulse width. Since the pulse period is much smaller than the response period of the hydraulic system, based on the operating principle of the electro-hydraulic proportional flow valve, the flowrate of the electro-hydraulic proportional flow valve (corresponding to the movement speed of the hydraulic executing element) only responds to the average value of the valve core current. The valve core current detecting device 36 compares a detected valve core current with a given valve core current. The difference from the comparison is converted to the PWM output signal having a corresponding duty ratio by the PWM regulating device 34, so as to form the valve core current for driving the electro-hydraulic proportional flow valve 35, thereby following the given current, which can restrain the effect of factors such as the voltage fluctuations of power supply and the uneven resistance distribution of the valve core on the valve core current.

The speed regulating control system for the electro-hydraulic proportional flow valve according to the present invention further includes an electro-hydraulic proportional flow valve characteristic measuring module 32, a displacement/speed measuring module 38 and a feedforward control module 31. Due to the same parameter property of the displacement and the speed, the speed will be exemplarily described as an example. The displacement/speed measuring module 38 measures parameters such as speed or displacement of the hydraulic executing element 37, and sends the measured result to the electro-hydraulic proportional flow valve characteristic measuring module 32. The electro-hydraulic proportional flow valve characteristic measuring module 32 measures offline the minimum actuating current Imin, the maximum actuating current Imax of the electro-hydraulic proportional flow valve and the maximum speed MaxSpeed of the hydraulic executing element, and sends the measured results to the feedforward control module 31. Using these measured results from the electro-hydraulic proportional flow valve characteristic measuring module 32, the feedforward control module 31 establishes a map corresponding to the relationship between the speed of the hydraulic executing element and the valve core current. When controlling the speed of the executing mechanism, the given speed of the system as the feedforward control signal is directly converted to the given valve core current which is sent to the valve core current feedback control circuit to drive the electro-hydraulic proportional flow valve.

From the viewpoint of the control theory, since the control action is not from the speed closed-loop and bypasses the given speed of the speed closed-loop but is directly applied to the speed control circuit, this control belongs to a feedforward control mode. Due to this control action, even if there is no speed feedback, the speed of the hydraulic executing element may better follow the given speed during the speed regulating control and the control quality is much higher than that of the system shown in Fig. 2. In the case that there is a speed feedback, compared with the system that doesn't adopt the feedforward control method, "the speed control error" shown in Fig. 3 will be greatly reduced, thereby significantly reducing the burden on the feedback regulation of the speed closed-loop and substantially increasing control accuracy and dynamic quality of the speed control.

The speed regulating control system for the electro-hydraulic proportional flow valve according to the present invention further includes a current regulating module 33. A comparator compares the given speed signal of the system with the output speed signal from the displacement/speed measuring module 38, and sends the speed control error signal to the current regulating module 33. The speed control error signal is performed a control calculation by the current regulating module 33, is mixed with the feedforward control signal and then sent to the valve core current feedback control circuit. As a supplement for the feedforward control, the current regulating module 33 can further improve the control accuracy of the system.

The key point of the speed regulating control system for the electro-hydraulic proportional flow valve according to the present invention lies in that the feedforward control way which may reduce the dependency on the closed-loop speed control circuit is adopted so as to improve the control accuracy of the speed control. The basis that the feedforward control way can be adopted is to obtain the corresponding relationship curve between the valve core current and the speed of the hydraulic executing element. According to the operating principle of the flowrate-type electro-hydraulic proportional flow valve, the flowrate of the electro-hydraulic proportional flow valve corresponds to the actuating speed of the actuator, and the flowrate corresponding to a certain valve core current is determined based on the following parameters: i ) the valve core minimum actuating current Imin, wherein, when the valve core current reaches the value Imin, the electro-hydraulic proportional flow valve begins to generate a small flowrate and the executing element begins to move slightly, on the contrary, when the valve core current is smaller than the value Imin, there is no flowrate in the electro-hydraulic proportional flow valve; ii) the valve core maximum actuating current Imax, wherein, when the valve core current reaches the value Imax, the valve core is just opened to the maximum and the flowrate may not increase even if the valve core current continues to increase, and when the valve core current decreases from the value Imax, the flowrate may decrease accordingly; iii) the maximum speed Maxspeed of the executing element, which speed corresponds to the maximum flowrate Maxflow of the electro-hydraulic proportional flow valve.

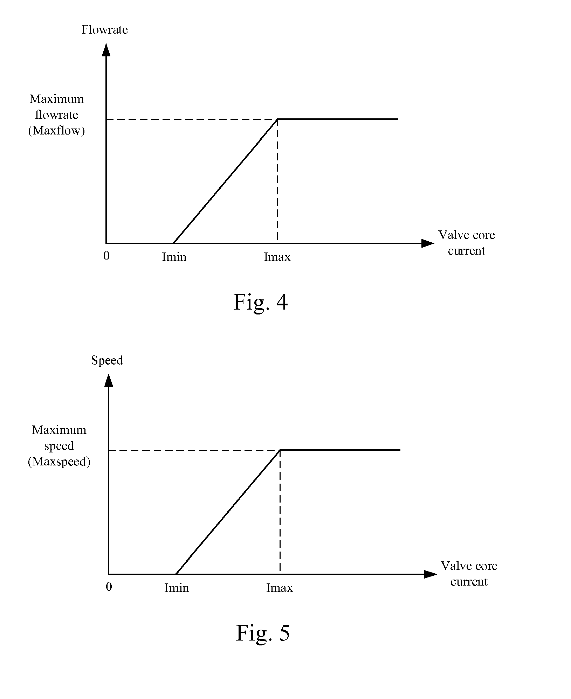

According to the operating principle of the hydraulic executing element, the actuating speed of the hydraulic executing element is proportional to the flowrate of the electro-hydraulic proportional flow valve. Furthermore, according to the characteristic of the electro-hydraulic proportional flow valve, the relationship between the flowrae of the electro-hydraulic proportional flow valve and the valve core current within the range from Imin to Imax is shown as the curve in Fig. 4. By measuring the maximum speed Maxspeed of the hydraulic executing element corresponding to the maximum flowrate Maxflow as well as Imin and Imax, the corresponding relationship between the speed of the hydraulic executing element and the valve core current of the electro-hydraulic proportional flow valve as shown in Fig. 5 may be deduced.

The corresponding relationship curve between the valve core current within the range from Imin to Imax and the speed of the executing element as shown in Fig. 5 has a strong practical significance. As shown in Fig. 5, within the range from Imin to Imax, the valve core current of the electro-hydraulic proportional flow valve and the speed of the hydraulic executing element have a linear relationship therebetween. If the linear relationship curve is obtained, the corresponding relationship curve between the speed of the hydraulic executing element and the valve core current of the electro-hydraulic proportional flow valve may be determined, and in turn the equation regarding the corresponding relationship curve between the speed of the hydraulic executing element and the valve core current of the electro-hydraulic proportional flow valve may be obtained. By building the equation into feedforward control module 31, the corresponding valve core current of the electro-hydraulic proportional flow valve can be directly calculated by substituting the given speed into the equation built in the feedforward control module 31. The PWM regulating device 34 and the electro-hydraulic proportional flow valve 35 may be directly driven by the obtained valve core current, which can more accurately control the speed of the hydraulic executing element without depending on the speed feedback.

In the speed regulating control system for the electro-hydraulic proportional flow valve according to the present invention, the electro-hydraulic proportional flow valve characteristic measuring module 32 is an offline working module. That is, the electro-hydraulic proportional flow valve characteristic measuring module 32 conducts the characteristic test relating to Imin, Imax of the electro-hydraulic proportional flow valve and Maxspeed and performs the normal speed regulation of the electro-hydraulic proportional flow valve separately in terms of time.

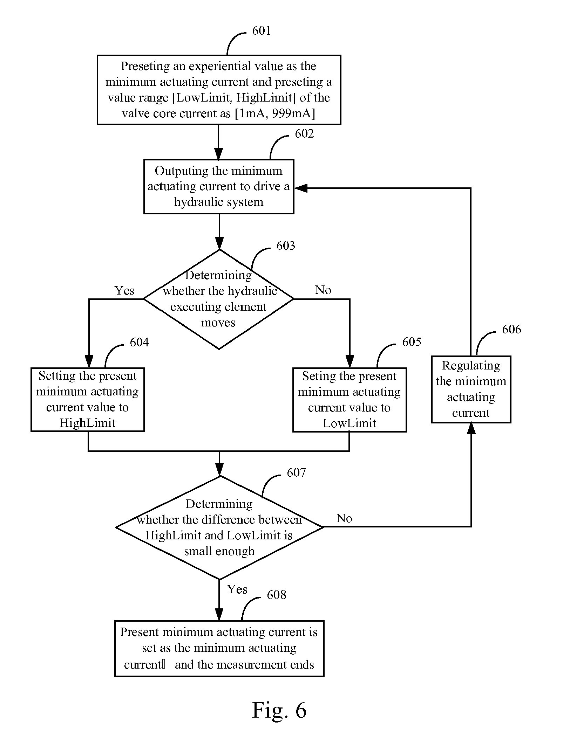

Fig. 6 is a schematic diagram of a measuring process for the minimum actuating current of the hydraulic executing element. As shown in Fig. 6, the step 601 is firstly performed, in which an experiential value of the minimum actuating current, for example, 290mA, is preset as the minimum actuating current Imin, which helps to more quickly capture the minimum actuating current near the experiential value, and a value range [LowLimit, HighLimit] of the valve core current of the electro-hydraulic proportional flow valve is preset as [1mA, 999mA]. The actual value of the valve core current of the electro-hydraulic proportional flow valve will not go beyond the preset value range. The valve core current value Imin of the electro-hydraulic proportional flow valve is output to drive a hydraulic system operate for a period, for example, 30 seconds (step 602). In this period, the displacement or speed of the hydraulic executing element is continuously measured to determine whether it moves (step 603). If the hydraulic executing element moves, it is determined that the valve core minimum actuating current of the electro-hydraulic proportional flow valve can not be larger than the present value Imin, thus, HighLimit in the value range is changed as the present value Imin (step 604); on the contrary, LowLimit is changed as the present value Imin (step 605). Next, it is determined whether HighLimit approaches LowLimit enough, for example, the difference therebetween is less than or equal to 1mA (step 607). If the difference is small enough, the present Imin is set as the minimum actuating current, and the offline measurement of the minimum actuating current ends (step 608); otherwise, the value of Imin is adjusted (step 606), that is, is increased or decreased by a fixed current difference (the difference may be referred as a step-length, for example, 16mA) from the preset minimum current experiential value so as to search the minimum actuating current. When determining that the minimum actuating current would be within one step-length, the middle value in the step-length is then chosen to search repetitively, and shorten the value range of the valve core current until the value range is small enough.

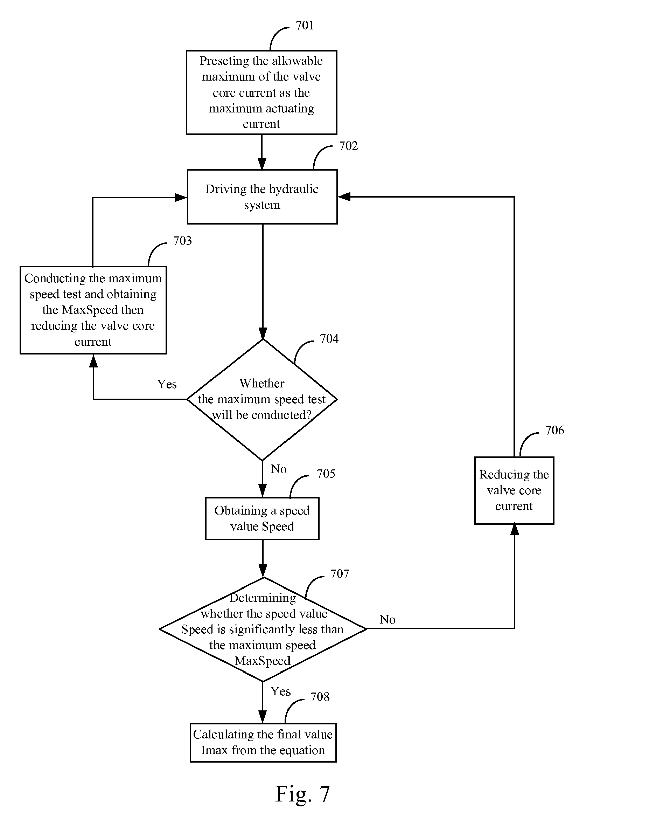

Fig. 7 is a schematic diagram of a measuring process for the maximum actuating current of the hydraulic executing element. As shown in Fig. 7, first, the maximum rated current allowable for the valve core coil of the electro-hydraulic proportional flow valve is set as the maximum actuating current of the valve core (step 701). The current value is necessarily greater than the actual valve core maximum actuating current. Then, the hydraulic system is driven at the maximum current (step 702). Next, it is determined whether the maximum speed MaxSpeed test will be conducted (step 704). If yes, the maximum speed MaxSpeed test of the hydraulic executing element will be conducted and then the valve core current of the electro-hydraulic proportional flow valve is reduced (step 703). The reduced amount of the valve core current may take a larger value immediately after the test of the maximum speed is finished such that the valve core current is suddenly reduced to the vicinity of the maximum actuating current. In other embodiments, the reduced amount of the valve core current may take a smaller value, for example, 20mA. After testing of the speed, a speed value Speed corresponding to the valve core current may be obtained (step 705). Next, it is determined whether the speed value Speed is significantly less than the maximum speed MaxSpeed, for example, less than 0.8 times of the MaxSpeed (step 707). If yes, the speed value Speed and the valve core current Imax' at this time are recorded. The maximum actuating current Imax is calculated (step 708) from the linear equation:

$$Imax = Imin + (Imax' - Imin) * MaxSpeed/Speed$$

The test is finished. Otherwise, the process continues to reduce the valve core current of the electro-hydraulic proportional flow valve (step 706), so as to conduct a new speed test until the above conditions are satisfied.

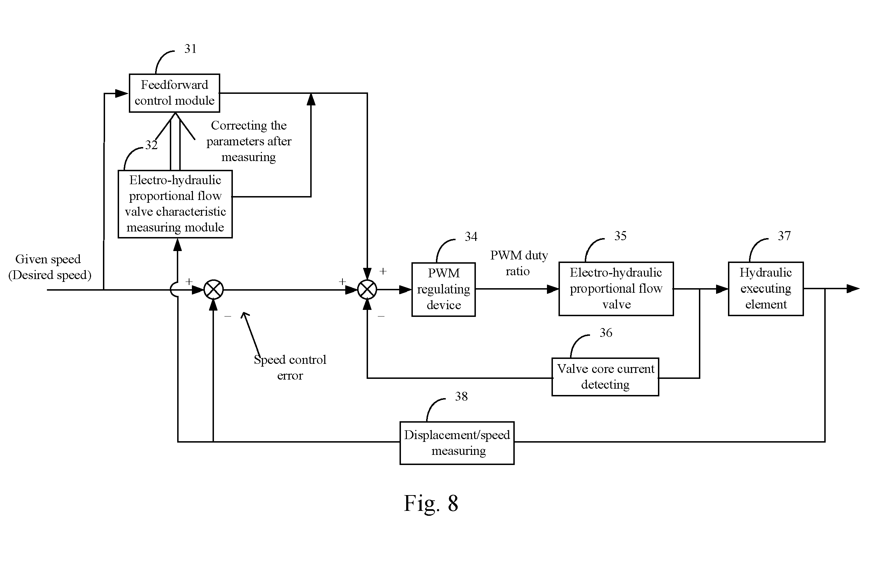

Fig. 8 is a schematic diagram of a speed regulating control system for an electro-hydraulic proportional flow valve according to a second embodiment of the present invention. As shown in Fig. 8, the difference between the speed regulating control system for the electro-hydraulic proportional flow valve according to the present embodiment and the speed regulating control system for the electro-hydraulic proportional flow valve shown in Fig. 3 is that the current regulating module 33 is removed. The speed control error between the speed and the given speed of the hydraulic executing element is directly input to and mixed with the feedforward control signal. Although the current regulating module 33 is removed, mainly depending on the function of the feedforward control according to the present invention, the requirement of the control accuracy still may be met in an application where the accuracy requirement is not very high.

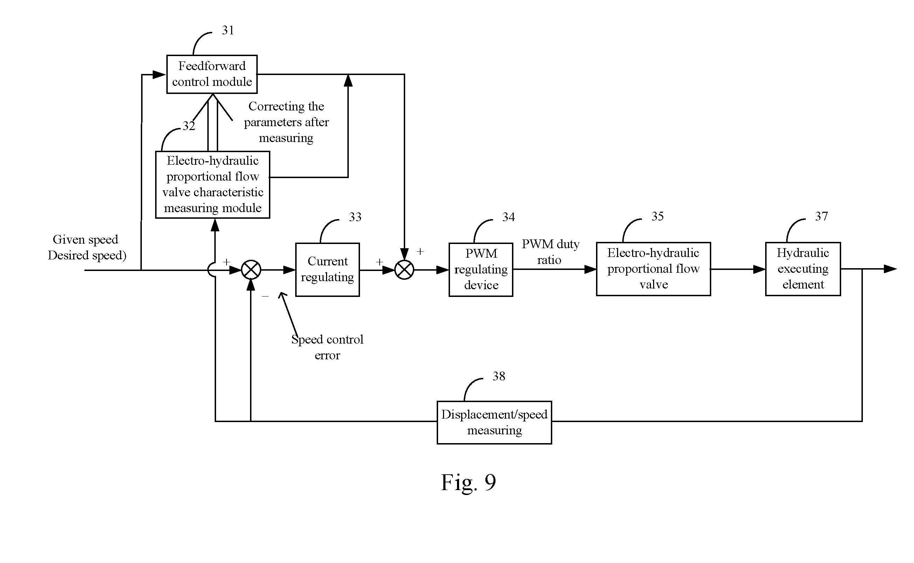

Fig. 9 is a schematic diagram of a speed regulating control system for an electro-hydraulic proportional flow valve according to a third embodiment of the present invention. As shown in Fig. 9, the difference between the speed regulating control system for the electro-hydraulic proportional flow valve according to the present embodiment and the speed regulating control system for the electro-hydraulic proportional flow valve shown in Fig. 3 lies in that the valve core current detecting module 36 is removed such that the speed regulating control system for the electro-hydraulic proportional flow valve becomes a single closed-loop speed regulating control system for electro-hydraulic proportional flow valve having the function of feedforward control, which is different from the double closed-loop system having the current closed-loop system and the displacement (speed) closed-loop system in Fig. 3. Since the control effect is increased by the feedforward control, the higher control accuracy may be achieved even in the single closed-loop control system.

The electro-hydraulic proportional flow valve characteristic measuring module 32, the feedforward control module 31 and the current regulating module of the speed regulating control system for the electro-hydraulic proportional flow valve according to the present invention may be carried out by using software.

The speed regulating control system for the electro-hydraulic proportional flow valve according to the present invention makes an inner loop current compensation and a speed feedforward control to the speed regulating control system by the use of the valve core current feedback and the feedforward control method based on the offline measurement of the electro-hydraulic proportional flow valve characteristic, so as to substantially increase the response quality and control accuracy of the forward channel of the speed regulating control system and reduce the regulation amount of the speed feedback channel, thereby improving the quality of the closed-loop control. In particular, in the case that a plurality of executing mechanisms are requested to be cooperated, the invention provides an approach to improve the cooperation control quality. For example, in the movement control system of the ends of the arms of the arm-type engineering machinery, a plurality of arms are requested to be cooperated and a plurality of speed regulating control systems are combined, which requires that the speed of each arm can be precisely controlled and the response speed is rapid as possible. This function can be achieved by the above control system.

In general, after operating for a period, each characteristic parameter value of the electro-hydraulic proportional flow valve will be changed. At this time, new parameter values may be quickly determined by performing the electro-hydraulic proportional flow valve characteristic measuring module once, so as to resume and improve the control quality of the system.

The above description is only the preferred embodiments of the present invention, and is not intended to limit the present invention in any form. Although the preferred embodiments according to the present invention are disclosed as foregoing, they are not intended to limit the invention. It should be noted that for persons skilled in the art, the technical solutions of the invention may be improved and modified or be changed as equivalent embodiments by use of the above-disclosed methods and technical contents without departing from the scope of the technical solutions of the present invention. Therefore, any simple improvement, equivalent change and modification made to the above embodiment according to the technical substantive contents of the present invention without departing from the contents of the technical solutions of the present invention, falls into the protection scope of the technical solutions of the present invention.

## Claims

1. A speed regulating control system for an electro-hydraulic proportional flow valve, comprising:

   a PWM regulating device;
   an electro-hydraulic proportional flow valve; and
   a hydraulic executing element,
   wherein the electro-hydraulic proportional flow valve and the hydraulic executing element are driven by a PWM signal from the PWM regulating device; and
   wherein the control system further comprises
   a displacement/speed measuring module;
   an electro-hydraulic proportional flow valve characteristic measuring module; and
   a feedforward control module,
   wherein the displacement/speed measuring module measures a displacement or speed of the hydraulic executing element and sends the measured result to the electro-hydraulic proportional flow valve characteristic measuring module; the electro-hydraulic proportional flow valve characteristic measuring module measures a minimum actuating current and a maximum actuating current of the electro-hydraulic proportional flow valve and a maximum speed of the hydraulic executing element and sends these measured results to the feedforward control module; and the feedforward control module establishes a corresponding relationship between a movement speed of the hydraulic executing element and a valve core current by use of these measured results, and inputs a valve core current value in correspondence with a given speed value based on the corresponding relationship to the PWM regulating device so as to drive the electro-hydraulic proportional flow valve.

2. The control system according to claim 1, wherein the speed measuring module compares the measured movement speed of the hydraulic executing element with a given speed of the system to obtain a speed error signal.

3. The control system according to claim 2, wherein the control system further comprises a current regulating module to regulate the speed error signal and input the regulated result to the PWM regulating device.

4. The control system according to claim 1, wherein the control system further comprises a valve core current detecting module connected with a valve core coil of the electro-hydraulic proportional flow valve and forming a valve core current feedback control circuit along with the PWM regulating device.

5. A speed regulating control method for an electro-hydraulic proportional flow valve, comprising:

   measuring a maximum actuating speed of a hydraulic executing element and a maximum actuating current and a minimum actuating current of a valve core of the electro-hydraulic proportional flow valve;

establishing a corresponding relationship between a movement speed of the hydraulic executing element and a valve core current by use of the maximum actuating speed, the maximum actuating current and the minimum actuating current of the electro-hydraulic proportional flow valve;

obtaining a valve core current in correspondence with a given speed of the system according to the corresponding relationship; and

driving the valve core current control circuit with the valve core current in correspondence with the given speed of the system.

6. The control method according to claim 5, wherein the measuring is an online measuring or an offline measuring.

Adjusting PWM duty ratio manually → **PWM generator** (11) → PWM duty ratio → **Electro-hydraulic proportional flow valve** (12) → **Hydraulic executing element** (13) → Observing speed visually

Fig. 1

Given speed/ Desired speed + → ⊗ − → **PWM regulating device** (21) → PWM duty ratio → **Electro-hydraulic proportional flow valve** (22) → **Hydraulic executing element** (23) →

**Speed detection** (24)

Fig. 2

Given speed (Desired speed)

31 Feedforward control module

32 Electro-hydraulic proportional flow valve characteristic measuring module

Correcting parameters after measuring

33 Current regulating

Speed control error

34 PWM regulating device

PWM duty ratio

35 Electro-hydraulic proportional flow valve

36 Valve core current detecting

37 Hydraulic executing element

38 Displacement/speed measuring

Fig. 3

Flowrate

Maximum
flowrate
(Maxflow)

0          Imin                    Imax

Valve core
current

## Fig. 4

Speed

Maximum
speed
(Maxspeed)

0          Imin                    Imax

Valve core
current

## Fig. 5

601

Preseting an experiential value as the minimum actuating current and preseting a value range [LowLimit, HighLimit] of the valve core current as [1mA, 999mA]

602

Outputing the minimum actuating current to drive a hydraulic system

603

Determining whether the hydraulic executing element moves

Yes           No

604

Setting the present minimum actuating current value to HighLimit

605

Seting the present minimum actuating current value to LowLimit

606

Regulating the minimum actuating current

607

Determining whether the difference between HighLimit and LowLimit is small enough

No

Yes

608

Present minimum actuating current is set as the minimum actuating current，and the measurement ends

Fig. 6

701

Preseting the allowable
maximum of the valve
core current as the
maximum actuating
current

702

Driving the hydraulic
system

703

Conducting the maximum
speed test and obtaining
the MaxSpeed then
reducing the valve core
current

704

Whether
the maximum speed test
will be conducted?

Yes

No

705

Obtaining a speed
value Speed

706

Reducing the
valve core
current

707

Determining
whether the speed value
Speed is significantly less than
the maximum speed
MaxSpeed

No

Yes

708

Calculating the final value
Imax from the equation

Fig. 7

Fig. 8

Given speed
(Desired speed)

31 Feedforward control module

32 Electro-hydraulic proportional flow valve characteristic measuring module

Correcting the parameters after measuring

33 Current regulating

Speed control error

34 PWM regulating device

PWM duty ratio

35 Electro-hydraulic proportional flow valve

37 Hydraulic executing element

38 Displacement/speed measuring

Fig. 9

# INTERNATIONAL SEARCH REPORT

| International application No. |
| --- |
| PCT/CN2008/073091 |

**A.   CLASSIFICATION OF SUBJECT MATTER**

See extra sheet

According to International Patent Classification (IPC) or to both national classification and IPC

**B.     FIELDS SEARCHED**

Minimum documentation searched (classification system followed by classification symbols)

IPC: F15B, G05B

Documentation searched other than minimum documentation to the extent that such documents are included in the fields searched

Electronic data base consulted during the international search (name of data base and, where practicable, search terms used)

EPODOC, WPI, PAJ, CNPAT: hydraulic, hydro, feed, feedforward, feed forward, speed, rate, control, servo, proportion, valve

**C.   DOCUMENTS CONSIDERED TO BE RELEVANT**

| Category* | Citation of document, with indication, where appropriate, of the relevant passages | Relevant to claim No. |
| --- | --- | --- |
| A | CN1047135A (VICKERS INC) 21 Nov. 1990 (21.11.1990) see page 4, lines 14-24, figure 1 of the description | 1-6 |
| A | JP56094006A (MITSUBISHI HEAVY IND LTD) 30 Jul. 1981 (30.07.1981) see figure 2 | 1-6 |
| A | JP9291902A (TADANO LTD) 11 Nov. 1997 (11.11.1997) see the whole document | 1-6 |
| A | CN1651665A (GUANGXI LIUGONG MACHINERY CO LTD) 10 Aug. 2005 (10.08.2005) see the whole document | 1-6 |
| A | CN2644398Y (CHANGSHA ZOOMLION HEAVY INDUST) 29 Sep. 2004 (29.09.2004) see the whole document | 1-6 |
| P, X | CN101169141A (SANY HEAVY IND CO LTD) 30 Apr. 2008 (30.04.2008) see claims 1-6, figure 3 | 1-6 |

☐ Further documents are listed in the continuation of Box C.        ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 04 Feb. 2009 (04.02.2009) | **26 Feb. 2009 (26.02.2009)** |

| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>WANG, Qinghua<br><br>Telephone No. (86-10)62085252 |
| --- | --- |

Form PCT/ISA/210 (second sheet) (April 2007)

<div align="center">

**INTERNATIONAL SEARCH REPORT**
Information on patent family members

</div>

| | International application No. |
|---|---|
| | PCT/CN2008/073091 |

| Patent Documents referred in the Report | Publication Date | Patent Family | Publication Date |
|---|---|---|---|
| CN1047135A | 21.11.1990 | EP0393650A2 | 24.10.1990 |
| | | EP0393650A3 | 28.08.1991 |
| | | CN1022865C | 24.11.1993 |
| | | JP3000302A | 07.01.1991 |
| | | US5023535A | 11.06.1991 |
| JP56094006A | 30.07.1981 | NONE | |
| JP9291902A | 11.11.1997 | JP3761246B2 | 29.03.2006 |
| CN1651665A | 10.08.2005 | CN100422451C | 01.10.2008 |
| CN2644398Y | 29.09.2004 | NONE | |
| CN101169141A | 30.04.2008 | NONE | |

Form PCT/ISA/210 (patent family annex) (April 2007)

# INTERNATIONAL SEARCH REPORT

International application No.

PCT/CN2008/073091

Continuation of: second sheet   A.   CLASSIFICATION OF SUBJECT MATTER

G05B6/02 (2006.01) i

G05B11/28 (2006.01) i

F15B13/044 (2006.01) i

F15B13/16 (2006.01) i

F15B11/04 (2006.01) i

Form PCT/ISA/210 (extra sheet) (April 2007)

**EP 2 233 990 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200710168189